# EUROPEAN PATENT APPLICATION

(11) **EP 4 603 997 A1**
(43) Date of publication of application: **20.08.2025**
(21) Application number: 24199893.9
(22) Date of filing: 12.09.2024
(51) Int. Cl.: G06F 21/57

(54) **INFORMATION CONSTRUCTION APPARATUS USING GENERATIVE MODEL AND INFORMATION CONSTRUCTION METHOD**

(30) Priority: 15.02.2024 JP 2024021315
(71) Applicant: Hitachi, Ltd., Tokyo 100-8280 (JP)
(72) Inventor: KASUYA, Momoka, Tokyo, 1008280 (JP); MORITA, Nobuyoshi, Tokyo, 1008280 (JP); YAMAZAKI, Hiroki, Tokyo, 1008280 (JP)
(74) Representative: MERH-IP Matias Erny Reichl Hoffmann Patentanwälte PartG mbB

(57) **Abstract**

An information construction apparatus generates a prompt used to obtain a single or a plurality of element labels corresponding to configuration information and inputs the prompt into a generative model in a case where the configuration information extracted from input information of which authenticity is reserved is not included in configuration management information at least as a part of product management information. The information construction apparatus calculates reliability of an element label for each of a single or a plurality of the element labels extracted from output data of the generative model. The information construction apparatus adds a data set including the single or the plurality of element labels of which the reliability satisfies a condition and the extracted configuration information to the configuration management information as an authenticity data set.

## Description

### CROSS-REFERENCE TO PRIOR APPLICATION

This application relates to and claims the benefit of priority from Japanese Patent Application number 2024-021315, filed on February 15, 2024 the entire disclosure of which is incorporated herein by reference.

### BACKGROUND

The present invention generally relates to information processing using a generative model.

A software bill of materials (SBOM) has been known. The SBOM is used for software vulnerability management. As a technique related to vulnerability management, for example, the technique disclosed in Japanese Patent Application Publication No. 2020-021309 has been known.

### SUMMARY

By using at least a part of SBOM as output data of a generative model (typically, text generative model), it is possible to reduce a load on construction of the SBOM.

However, since the generative model is generally a probabilistic model, output data of the generative model is not necessarily correct.

This type of problem may also occur in a case where information constructed using the output data of the generative model is product management information other than the SBOM (in other words, in a case where product is product other than software).

An information construction apparatus acquires information of which authenticity is reserved as input information. In a case where configuration information extracted from the input information is not included in configuration management information at least as a part of product management information regarding a single or a plurality of products, the apparatus generates a prompt used to obtain a single or a plurality of element labels corresponding to the configuration information and inputs the prompt into a generative model. In a case where a single or a plurality of element labels is extracted from output data of the generative model, the apparatus calculates reliability of the element label, for each of the single or the plurality of element labels. In a case where the single or the plurality of extracted element labels includes one or more high-reliability labels, the apparatus adds a data set including the one or more high-reliability labels and the extracted configuration information to the configuration management information as an authenticity data set. The configuration information is information indicating a product configuration that is at least one of a name and a model number of a product. The high-reliability label is an element label of which reliability satisfies a condition. Each authenticity data set included in the configuration management information is a data set including one or more high-reliability labels and configuration information corresponding to the one or more high-reliability labels.

According to one aspect of the present invention, it is possible to construct at least a part of highly reliable product management information using a generative model. Problems, configurations, and effects other than the above will be clarified by the following description of the embodiment.

### BRIEF DESCRIPTION OF THE DRAWINGS

FIG. 1 is a diagram illustrating an example of a configuration of an information construction apparatus according to an embodiment;
FIG. 2 is a diagram illustrating an example of a flow of processing executed by the information construction apparatus;
FIG. 3 is a diagram illustrating an example of a flow of first DB construction processing;
FIG. 4 is a diagram illustrating an example of a flow of second DB construction processing;
FIG. 5 is a diagram illustrating an example of a flow of DB update processing;
FIG. 6 is a diagram illustrating a configuration example of a configuration management DB;
FIG. 7 is a diagram illustrating a configuration example of a temporary management DB;
FIG. 8 is a diagram illustrating a configuration example of an authenticity evaluation rule DB; and

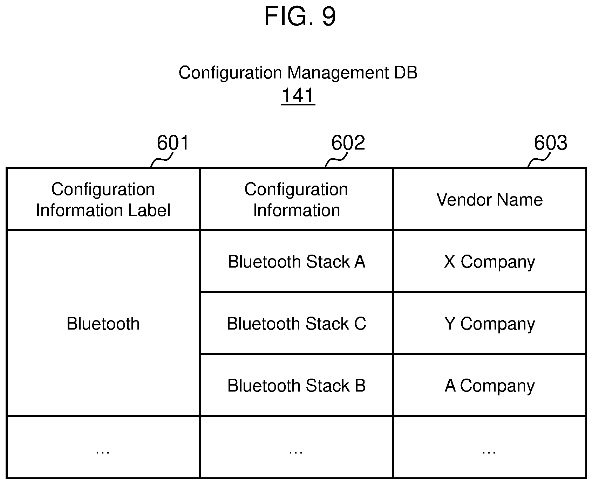

FIG. 9 is a diagram illustrating a configuration example of an updated configuration management DB.

### DESCRIPTION OF THE PREFERRED EMBODIMENTS

In the following description, an "interface apparatus" may be one or more interface devices. The one or more interface devices may be at least one of the following.
· One or more input/output (I/O) interface devices. The input/output (I/O) interface device is an interface device for at least one of an I/O device and a remote display computer. The I/O interface device for the display computer may be a communication interface device. At least one I/O device may be a user interface device, for example, either one of an input apparatus such as a keyboard or a pointing device and an output apparatus such as a display device.
· One or more communication interface devices. The one or more communication interface devices may be one or more same type of communication interface devices (for example, one or more network interface cards (NIC)) or may be two or more different types of communication interface devices (for example, NIC and host bus adapter (HBA)).

In the following description, a "memory" may be one or more memory devices that are an example of one or more storage devices and may be typically a main storage device. At least one memory device in the memory may be a volatile memory device or may be a nonvolatile memory device.

Furthermore, in the following description, a "permanent storage apparatus" may be one or more permanent storage devices that are an example of one or more storage devices. The permanent storage device may be typically a nonvolatile storage device (for example, auxiliary storage device), and specifically, for example, may be a hard disk drive (HDD), a solid state drive (SSD), a non-volatile memory express (NVME) drive, or a storage class memory (SCM).

Furthermore, in the following description, a "storage apparatus" may be a memory and at least a memory of a permanent storage apparatus.

Furthermore, in the following description, a "processor" may be one or more processor devices. At least one processor device may be typically a microprocessor device such as a central processing unit (CPU) and may be another type of processor device such as a graphics processing unit (GPU). At least one processor device may be a single core or a multi core. At least one processor device may be a processor core. At least one processor device may be a processor device in a broad sense such as a circuit that is an aggregate of gate arrays with a hardware description language for executing a part or all of processing (for example, field-programmable gate array (FPGA), complex programmable logic device (CPLD), or application specific integrated circuit (ASIC)).

Furthermore, in the following description, there is a case where a function is described as an expression of "yyy unit". However, the function may be implemented by executing one or more computer programs with a processor, may be implemented by one or more hardware circuits (for example, FPGA or ASIC), or may be implemented by a combination thereof. In a case where the function is implemented by executing the program by the processor, determined processing is executed appropriately using the storage apparatus and/or the interface apparatus or the like. Therefore, the function may be at least a part of the processor. The processing described with the function as a subject may be processing executed by the processor or an apparatus including the processor. The program may be installed from a program source. The program source may be, for example, a program distribution computer or a computer-readable storage medium (for example, non-transitory storage medium). The description of each function is an example, and the plurality of functions may be integrated into a single function, or the single function may be divided into a plurality of functions.

Furthermore, in the following description, there is a case where data from which output is obtained with respect to input is described as an expression of "xxx DB" ("DB" is abbreviation of database). However, the data may be data having any structure (for example, may be structured data or non-structured data) or may be a learning model represented by a neural network that generates output for input, a genetic algorithm, and a random forest. Therefore, "xxx DB" can be referred to as "xxx information". In the following description, a configuration of each DB is an example, and a single DB may be divided into two or more DBs, and all or a part of two or more DBs may be a single DB.

Furthermore, in the following description, a "data set" is one aggregation of logical electronic data viewed from a program such as an application program, and for example, may be any one of a record, a file, a key value pair, a tuple, or the like. Hereinafter, as the data set, the record is used as an example.

Hereinafter, an embodiment will be described with reference to the drawings. In the following embodiment, a generative model may be, for example, a learned generative model that is a generative model learned using one or more data sets each including configuration information and a single or a plurality of element labels as teacher data. Software is adopted as an example of a product, and an SBOM is adopted as an example of product management information related to a single or a plurality of products. Furthermore, as the plurality of element labels, a configuration information label and a vendor name are adopted. As an example of the generative model, a text generative model, for example, a large language model (LLM) is adopted.

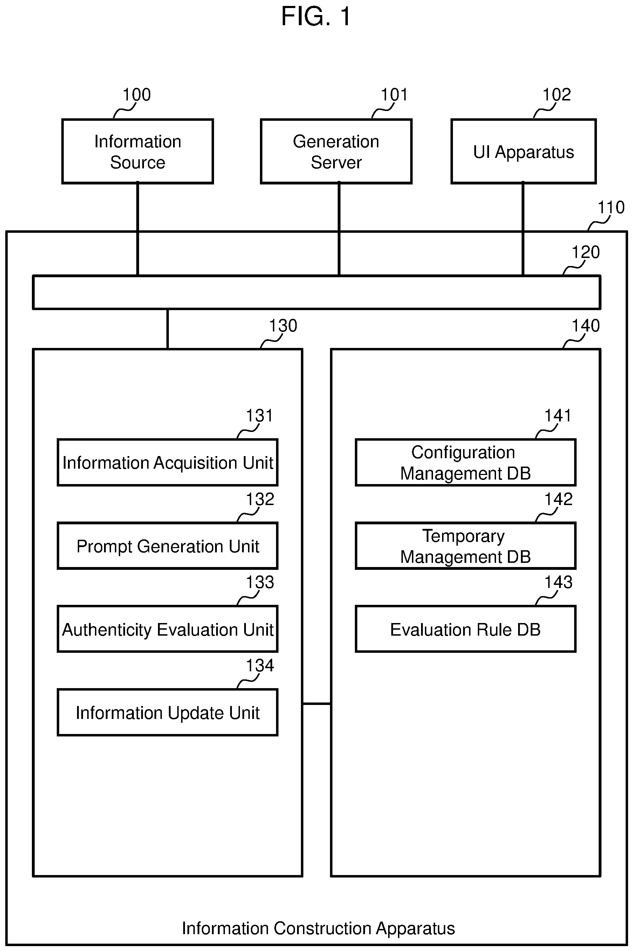

FIG. 1 is a diagram illustrating an example of a configuration of an information construction apparatus according to the embodiment.

An information construction apparatus 110 is a physical computer system (single or plurality of computers) in the present embodiment. However, the information construction apparatus 110 may be a logical computer system based on the physical computer system (for example, system as cloud computer service based on cloud platform) instead.

The information construction apparatus 110 includes an interface apparatus 120, a storage apparatus 140, and a processor 130 coupled thereto.

The interface apparatus 120 communicates with an external apparatus such as an information source 100, a generation server 101, or a user interface (UI) apparatus 102, for example, via a communication network (for example, Internet or wide area network (WAN)). The information source 100 may be a server (site) on the Internet and holds information regarding software. The generation server 101 may be a physical computer system or a logical computer system, includes the generative model, and executes processing using the generative model. Specifically, the generation server 101 receives a prompt from a transmission source, inputs the received prompt into the generative model, and returns data output from the generative model to the transmission source of the prompt. Although the generative model may be in an external server as illustrated in FIG. 1, the generative model stored in the storage apparatus 140 of the information construction apparatus 110 and in the information construction apparatus 110 may be used. The UI apparatus 102 may be an input/output apparatus such as a keyboard, a pointing device, or a display device and a remote information processing terminal as a client in a case where the information construction apparatus 110 is a server (for example, personal computer or smartphone). A user can transmit a desired instruction to the information construction apparatus 110 using the UI apparatus 102 or view information that is transmitted from the information construction apparatus 110 and displayed.

The storage apparatus 140 stores information and programs. The storage apparatus 140 stores, for example, a configuration management DB 141, a temporary management DB 142, and an evaluation rule DB 143 (these DBs 141 to 143 will be described later). Furthermore, the storage apparatus 140 stores a program to be executed by the processor 130.

Functions such as an information acquisition unit 131, a prompt generation unit 132, an authenticity evaluation unit 133, and an information update unit 134 (these functions 131 to 134 will be described later) are implemented by executing the program by the processor 130.

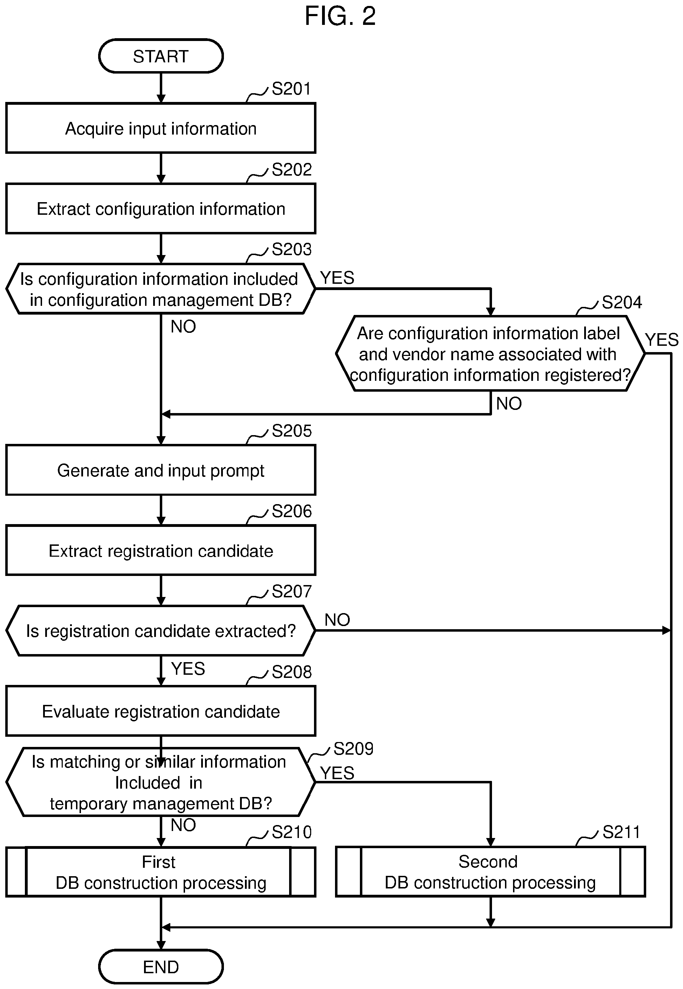

FIG. 2 is a diagram illustrating an example of a flow of processing executed by the information construction apparatus 110.

The information acquisition unit 131 acquires information of which authenticity is reserved, as input information, from the information source 100 (S201). The "information of which the authenticity is reserved" may mean information from the information source 100 (for example, site of security vendor, site of company that provides product information, national vulnerability database (NVD), or news site) operated by an institution that is considered to be reliable. That is, whether or not the authenticity of the information is reserved may depend on reliability of the information provided by the information source 100. In addition, definition of the "information of which the authenticity is reserved" may include information on which encryption processing is executed or information from which falsification is not detected in falsification detection processing.

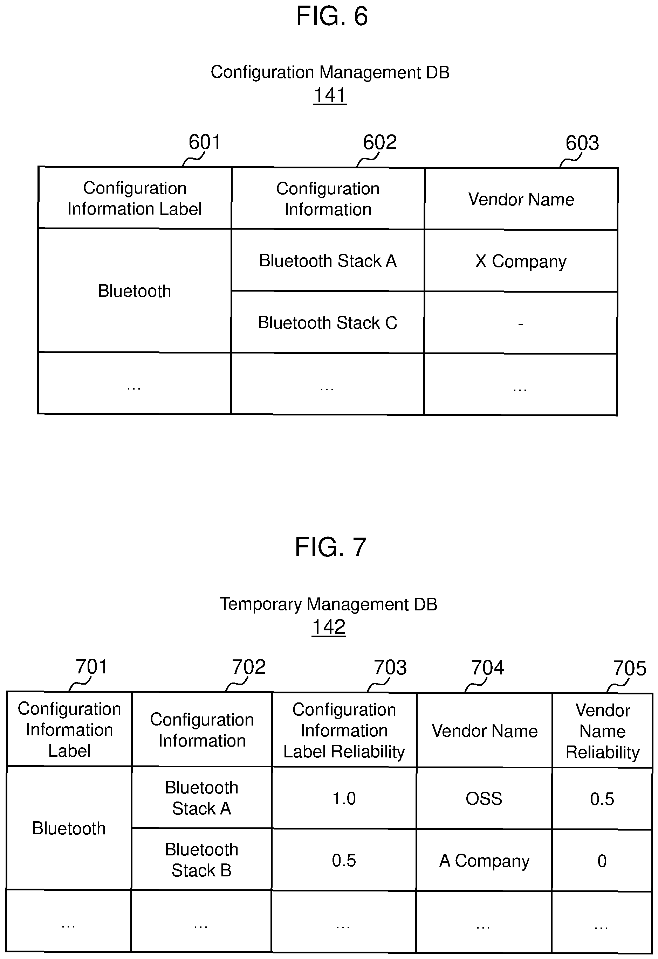

The information acquisition unit 131 extracts configuration information from the input information acquired in S201 (S202) and determines whether or not the configuration information is included in the configuration management DB 141 (S203). For example, in S202, the information acquisition unit 131 may extract the configuration information by inputting the input information into a learned machine learning model (for example, generative model) mounted on the information construction apparatus 110. Furthermore, for example, in S202, the information acquisition unit 131 may acquire the configuration information from an external information processing apparatus by inputting the input information into a learned machine learning model (for example, generative model) mounted on an external information processing apparatus of the information construction apparatus 110. These machine learning models may be models using the information of which the authenticity is reserved as input and the configuration information as output. The "configuration information" is information indicating a product configuration that is at least one of a name and a model number of a product. For example, as illustrated in FIG. 6, the configuration management DB 141 is a single or a plurality of records, and each record includes information including a configuration information label 601, configuration information 602, and a vendor name 603. The configuration information label 601 indicates a label of a category to which the product configuration belongs, and the vendor name indicates a name of a vendor of the product. Each record of the configuration management DB 141 includes the configuration information 602, the configuration information label 601 of which reliability is equal to or larger than a threshold, and the vendor name 603. In a case where the reliability of only one of the configuration information label and the vendor name is equal to or larger than the threshold, only one is registered in the configuration management DB 141 (refer to record of "Bluetooth Stack C" in configuration information 602 in FIG. 6). Such a configuration management DB 141 can be referred to as a DB of which authenticity is ensured.

In a case where a determination result in S203 is true (S203: YES), the information acquisition unit 131 determines whether or not the configuration information label and the vendor name associated with the configuration information are registered in the configuration management DB 141 (S204). In a case where both of the configuration information label and the vendor name are registered in the configuration management DB 141, the determination result in S204 is true. In a case where one or both of the configuration information label and the vendor name are not registered in the configuration management DB 141, the determination result in S204 is false.

In a case where the determination result in S204 is true (S204: YES), since both of the configuration information label and the vendor name of the configuration information extracted in S202 are registered in the configuration management DB 141, the processing ends.

In a case where the determination result in S203 is false (S203: NO), or in a case where the determination result in S204 is false (S204: NO), the prompt generation unit 132 generates a prompt as an inquiry or a request of the configuration information label and/or the vendor name that is missing in the configuration information extracted in S202 and inputs the prompt into the generative model, specifically, transmits the prompt to the generation server 101 in the present embodiment (S205). The information construction apparatus 110 receives output data of the generative model into which the prompt generated in S205 is input, from the generation server 101.

The authenticity evaluation unit 133 extracts a registration candidate from the output data (S206). The "registration candidate" here is a word estimated as the configuration information label and/or a word estimated as the vendor name. The estimation as the configuration information label and/or the vendor name may be made based on context of text included in the output data or may be made by another method. There may be no registration candidate in the output data. In a case where it is not possible to estimate the registration candidate in S206 (S207: NO), the processing ends.

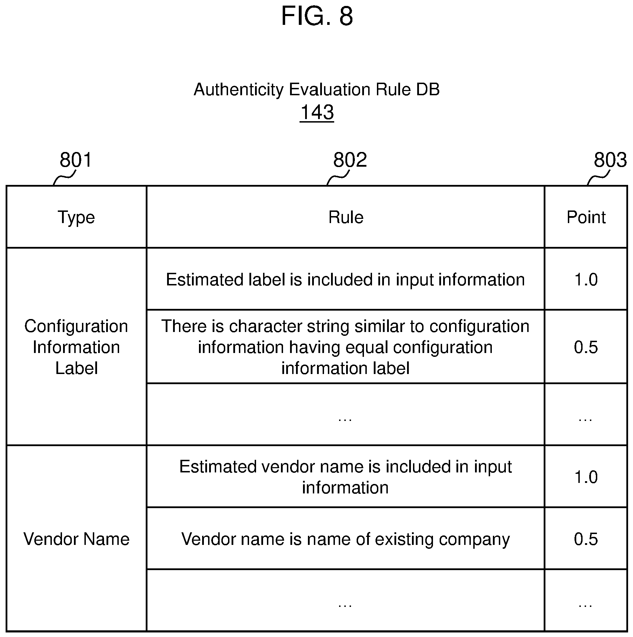

In a case where it is possible to estimate the registration candidate in S206 (S207: YES), the authenticity evaluation unit 133 evaluates the registration candidate, specifically, calculates reliability of the registration candidate (S208). In S208, the authenticity evaluation unit 133 calculates the reliability of the registration candidate (word estimated as configuration information label and/or word estimated as vendor name), based on the authenticity evaluation rule DB 143. For example, as illustrated in FIG. 8, the authenticity evaluation rule DB 143 includes a record for each evaluation rule, and each record includes information including a type 801, an evaluation rule 802, and a point 803. The type 801 indicates a type of the registration candidate (in the present embodiment, configuration information label or vendor name). The rule 802 indicates an evaluation rule. The point 803 indicates a point added when the evaluation rule is satisfied. The authenticity evaluation unit 133 calculates a total value of the point 803 corresponding to one or more rules 802 to which the registration candidate corresponds and calculates the total value or a value based on the total value as the reliability. Note that, about the rule 802 "Vendor name is a name of company that exists", as a method for checking that the vendor name is the name of the existing company, a method is considered using information in which existing company names are organized to some extent, such as a common platform enumeration (CPE) dictionary.

The information update unit 134 determines whether or not the temporary management DB 142 includes a record that matches or is similar to an extracted data set that is a data set including the configuration information extracted in S202 and the registration candidate extracted in S206 (word estimated as configuration information label and/or word estimated as vendor name) (S209). For example, as illustrated in FIG. 7, the temporary management DB 142 includes a single or a plurality of records, and each record is an example of a temporary data set. Each record includes information including a configuration information label 701, configuration information 702, configuration information label reliability 703, a vendor name 704, and vendor name reliability 705. The configuration information label reliability 703 indicates reliability of the configuration information 702, and the vendor name reliability 705 indicates reliability of the vendor name 704.

In a case where a determination result in S209 is false (S209: NO), first DB construction processing is executed (S210). In a case where the determination result in S209 is true (S209: YES), second DB construction processing is executed (S211).

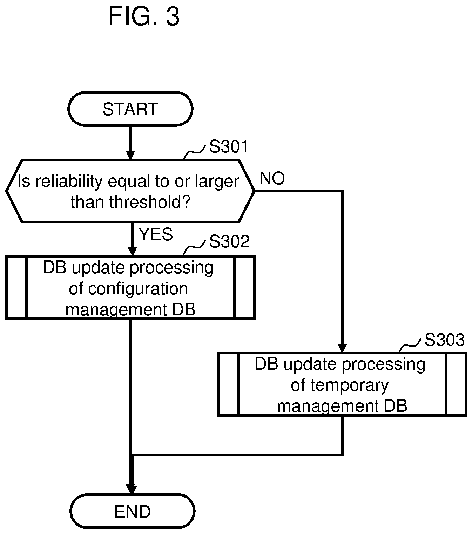

FIG. 3 is a diagram illustrating an example of a flow of the first DB construction processing.

The information update unit 134 determines whether or not the calculated reliability of the element label is equal to or larger than a threshold of the reliability of the element label, for each of the configuration information label and/or the vendor name in the extracted data set (S301). The thresholds of the reliability of the configuration information label and the vendor name may be the same of different.

In a case where there is an element label in which the determination result in S301 is true (S301: YES), DB update processing of the configuration management DB 141 is executed, for the element label (S302). That is, a set including the element label of which the reliability is equal to or larger than the threshold and the configuration information is registered in the configuration management DB 141.

In a case where there is an element label in which the determination result in S301 is false (S301: NO), DB update processing of the temporary management DB 142 is executed, for the element label (S302). That is, a set including the element label of which the reliability is less than the threshold, the reliability thereof, and the configuration information is registered in the temporary management DB 142.

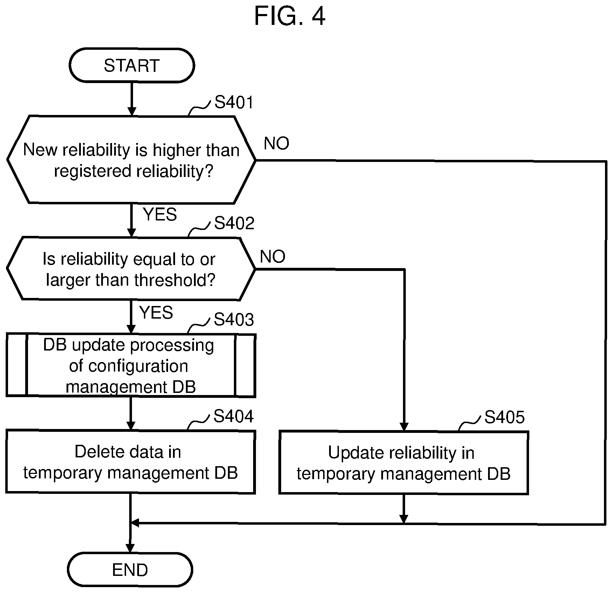

FIG. 4 is a diagram illustrating an example of a flow of the second DB construction processing. In the following description, a record that matches or is similar to the extracted data set in the temporary management DB 142 is referred to as a "target temporary record", for convenience. Components of the extracted data set and components of the target temporary record are the same. For example, that is, in a case where the configuration information, the configuration information label, and the vendor name are included, the target temporary record also includes the configuration information, the configuration information label, and the vendor name. In a case where the extracted data set includes the configuration information and the configuration information label and does not include the vendor name, the target temporary record includes the configuration information and the configuration information label and does not include the vendor name. In a case where the extracted data set includes the configuration information and the vendor name and does not include the configuration information label, the target temporary record includes the configuration information and the vendor name and does not include the configuration information label.

The information update unit 134 determines whether or not the calculated reliability of each of the element labels for the configuration information label and the vendor name is higher than reliability of the target temporary record (S401).

In a case where there is an element label in which a determination result in S401 is true (S401: YES), the information update unit 134 determines whether or not the calculated reliability of the element label is equal to or larger than the threshold of the reliability of the element label (S402) .

In a case where there is an element label in which a determination result in S402 is true (S402: YES), the DB update processing of the configuration management DB 141 is executed, for the element label (S403). That is, a pair including the element label and the configuration information of which the reliability is equal to or larger than the threshold is registered in the configuration management DB 141. The information update unit 134 deletes the set including the element label and the configuration information from the temporary management DB 142 (S404). Specifically, for example, in a case where a record of the temporary management DB 142 includes both of the configuration information label 701 and the vendor name 704, but the element label of which the reliability is equal to or larger than the threshold is only for the configuration information label 701, a set including the configuration information 702 and the configuration information label 701 (and configuration information label reliability 703) is deleted from the temporary management DB 142. However, a set including the configuration information 702 and the vendor name 704 (and vendor name reliability 705) remains in the temporary management DB 142. More specifically, for example, in the temporary management DB 142, information (for example, flag) indicating that registration to the configuration management DB 141 is completed may be associated with the element label, out of the configuration information label 701 and the vendor name 704, registered in the configuration management DB 141, and the association of the information may mean the deletion from the temporary management DB 142.

In a case where there is an element label in which the determination result in S402 is false (S402: NO), the DB update processing of the temporary management DB 142 is executed, for the element label (S405). That is, the element label of which the reliability is less than the threshold and a new reliability thereof are registered in the target temporary record of the temporary management DB 142.

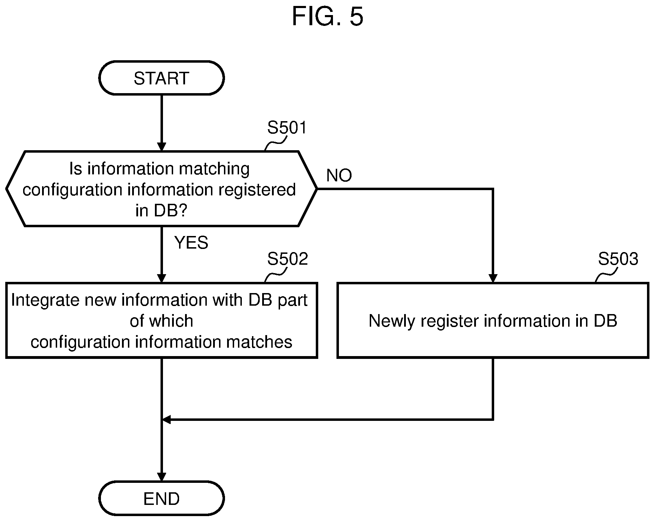

FIG. 5 is a diagram illustrating an example of a flow of the DB update processing of each of the configuration management DB 141 and the temporary management DB 142. In the description in FIG. 5, a "target DB" may correspond to both of the configuration management DB 141 and the temporary management DB 142.

When the target DB includes a record having the same configuration information as the extracted configuration information (S501: YES), the information update unit 134 integrates a record including the extracted element label (word estimated as configuration information label and/or word estimated as vendor name) with the record (S502). For example, in S403 in FIG. 4, S502 is performed.

On the other hand, when the target DB does not include the record having the same configuration information as the extracted configuration information (S501: NO), the information update unit 134 adds a record including the extracted configuration information and the extracted element label to the target DB (S503). For example, in S302 and S303 in FIG. 3, S503 is performed.

Although an embodiment of the present invention has been described, the embodiment is presented as an example and is not intended to limit the scope of the invention. The present invention can be implemented in other various forms, and various omissions, substitutions, and changes can be made without departing from the gist of the invention. This embodiment is included in the scope and the gist of the invention and also included in the invention described in claims and equivalent scope thereof.

For example, the above description can be summarized as follows. Note that the following summary may include supplementary description of the above description and description of modifications.

The information construction apparatus (for example, 110) includes the information acquisition unit (for example, 131), the prompt generation unit (for example, 132), the authenticity evaluation unit (for example, 133), and the information update unit (for example, 134). The information acquisition unit acquires the information of which the authenticity is reserved as the input information. In a case where the configuration information extracted from the input information is not included in the configuration management information at least as a part of the product management information regarding the single or the plurality of products, the prompt generation unit generates the prompt used to obtain the single or the plurality of element labels corresponding to the configuration information and inputs the prompt into the generative model. In a case where the single or the plurality of element labels is extracted from the output data of the generative model, the authenticity evaluation unit calculates the reliability of the element label, for each of the single or the plurality of element labels. In a case where the single or the plurality of extracted element labels includes one or more high-reliability labels, the information update unit adds a data set including the one or more high-reliability labels and the extracted configuration information to the configuration management information (for example, configuration management DB 141) as an authenticity data set. The configuration information is information indicating the product configuration that is at least one of the name and the model number of the product. The high-reliability label is an element label of which reliability satisfies a condition (for example, element label of which reliability is equal to or larger than threshold). The condition of the reliability may differ depending on a type of the element label or the like or may be common regardless of the type of the element label or the like. Each authenticity data set (for example, each record) included in the configuration management information is a data set including the one or more high-reliability labels and configuration information corresponding to the one or more high-reliability labels. As a result, at least a part of the product management information with high reliability can be constructed using the generative model. Each element label may be the configuration information label that is the label of the category to which the product configuration belongs or the vendor name that is the vendor of the product. Furthermore, the product management information may be a software bill of materials (SBOM). As a result, the configuration management information as a part of the SBOM can be constructed.

In a case where the one or the plurality of extracted element labels includes one or more low-reliability labels, the information update unit may add a data set including the one or more low-reliability labels and the extracted configuration information to temporary management information (for example, temporary management DB 142) as the temporary data set. The low-reliability label may be an element label of which reliability does not satisfy the condition (for example, element label of which reliability is less than threshold). Each temporary data set included in the temporary management information may be a data set including the one or more low-reliability labels and the configuration information corresponding to the one or more low-reliability labels. Improvement in information construction (for example, at least one of improvement of prompt and improvement of reliability calculation method) is expected based on the temporary management information in which the low-reliability label is registered.

The information update unit may perform similarity determination as to whether or not the target temporary data set that is the temporary data set that matches or is similar to the extracted data set including the one or the plurality of extracted element labels and the extracted configuration information is the temporary management information. In a case where the result of the similarity determination is true, the information update unit may delete the low-reliability label that matches or is similar to any one of the one or more high-reliability labels added to the configuration management information, among the single or the plurality of extracted element labels, from the target temporary data set. As a result, it is expected that the data set registered in the temporary management information is appropriately reflected on the configuration management information and enlargement of the temporary management information is suppressed.

The configuration information in the target temporary data set may match the configuration information in the extracted data set. As a result, it is possible to construct the configuration management information using the configuration information as a main key.

Each temporary data set included in the temporary management information may include the calculated reliability for each element label included in the temporary data set. For example, regarding each element label in the extracted data set, in a case where the calculated reliability of the element label is higher than the reliability of the element label that matches or is similar to the element label in the target temporary data set, the information update unit may update the reliability in the target temporary data set to the calculated reliability. As a result, from a latest reliability, a history of the calculated reliability, or the like, the improvement in the information construction (for example, at least one of improvement of prompt and improvement of reliability calculation method) is expected.

In a case where the result of the similarity determination is false and the plurality of extracted element labels includes the one or more low-reliability labels, regardless of whether or not the plurality of extracted element labels includes the one or more high-reliability labels, the information update unit may add a data set including the plurality of extracted element labels and the extracted configuration information to the temporary management information as the temporary data set. In a case where the result of the similarity determination is true and the target temporary data set includes one or more element labels, of which reliability does not satisfy the condition, included in the target temporary data set, and the reliability calculated for the element label that matches or is similar to the element label of the extracted data set satisfies the condition, for each of the one or more element labels, the information update unit may add the extracted data set and/or the target temporary data set to the configuration management information. That is, in a case where the temporary data set is specified as the target temporary data set after the extracted data set is added to the temporary management information as the temporary data set and the calculated reliability of the element label that matches or is similar to the low-reliability label satisfies the condition, for each of all the low-reliability labels in the temporary data set, the extracted data set and/or the target temporary data set may be added to the configuration management information. In this way, the plurality of extracted element labels is added to the configuration management information as a single combination, and therefore, the construction of the configuration management information with a detailed relationship between the configuration information and the element label is expected.

The authenticity evaluation unit may calculate the reliability of the element label on a rule basis, for at least one of the single or the plurality of extracted element labels. For example, the authenticity evaluation unit may specify whether or not any one or more of the plurality of evaluation rules associated with the point is satisfied, for at least one of the single or the plurality of extracted element labels and calculate the reliability based on the point corresponding to each of the one or more satisfied evaluation rules. As a result, appropriate reliability calculation is expected according to the type of the element label, the input information including the element label, or the like. In a case where the information update unit specifies that low reliability of a certain element label is maintained from the temporary management information, the information update unit may update an evaluation rule regarding the certain element label. As a result, more appropriate reliability calculation is expected.

In a case where the temporary data set including the extracted configuration information is in the temporary management information, the prompt generation unit may generate the prompt used to obtain the low-reliability label in the temporary data set for the configuration information. This increases a possibility that the element label that matches or is similar to the low-reliability label is extracted from the input information and the reliability that satisfies the condition is calculated for the element label, and thereby, it is possible to increase a possibility that the element label that matches or is similar to the low-reliability label in the temporary data set is reflected on the configuration management information.

## Claims

1. An information construction apparatus comprising:
an information acquisition unit configured to acquire information of which authenticity is reserved as input information;
a prompt generation unit configured to, in a case where configuration information extracted from the input information is not included in configuration management information at least as a part of product management information regarding a single or a plurality of products, generate a prompt used to obtain a single or a plurality of element labels corresponding to the configuration information and input the prompt into a generative model;
an authenticity evaluation unit configured to calculate reliability of the element label for each of the single or the plurality of element labels, in a case where the single or the plurality of element labels is extracted from output data of the generative model; and
an information update unit configured to, in a case where the single or the plurality of extracted element labels includes one or more high-reliability labels, add a data set including the one or more high-reliability labels and the extracted configuration information to the configuration management information as an authenticity data set, wherein
the configuration information is information indicating a product configuration that is at least one of a name and a model number of a product,
the high-reliability label is an element label of which reliability satisfies a condition, and
each authenticity data set included in the configuration management information is a data set including one or more high-reliability labels and configuration information corresponding to the one or more high-reliability labels.

2. The information construction apparatus according to claim 1, wherein
in a case where the single or the plurality of extracted element labels includes one or more low-reliability labels, the information update unit adds a data set including the one or more low-reliability labels and the extracted configuration information to temporary management information as a temporary data set,
the low-reliability label is an element label of which reliability does not satisfy a condition, and
each temporary data set included in the temporary management information is a data set including one or more low-reliability labels and configuration information corresponding to the one or more low-reliability labels.

3. The information construction apparatus according to claim 2, wherein
the information update unit performs similarity determination as to whether or not a target temporary data set that is a temporary data set that matches or is similar to an extracted data set including the single or the plurality of extracted element labels and the extracted configuration information is the temporary management information, and
in a case where a result of the similarity determination is true, the information update unit deletes a low-reliability label that matches or is similar to any one of the one or more high-reliability labels added to the configuration management information of the single or the plurality of extracted element labels, from the target temporary data set.

4. The information construction apparatus according to claim 3, wherein
configuration information in the target temporary data set matches the configuration information in the extracted data set.

5. The information construction apparatus according to claim 3, wherein
each temporary data set included in the temporary management information includes calculated reliability, for each element label included in the temporary data set.

6. The information construction apparatus according to claim 5, wherein
regarding each element label in the extracted data set, in a case where the calculated reliability of the element label is higher than reliability of an element label that matches or is similar to the element label, in the target temporary data set, the information update unit updates the reliability in the target temporary data set to the calculated reliability.

7. The information construction apparatus according to claim 6, wherein
the information update unit performs similarity determination as to whether or not a target temporary data set that is a temporary data set that matches or is similar to the extracted data set including the plurality of extracted element labels and the extracted configuration information is the temporary management information,
in a case where a result of the similarity determination is false and the plurality of extracted element labels includes one or more low-reliability labels, regardless of whether or not the extracted element label includes one or more high-reliability labels, the information update unit adds a data set including the plurality of extracted element labels and the extracted configuration information to the temporary management information as the temporary data set, and
in a case where the result of the similarity determination is true and the target temporary data set includes one or more element labels, of which reliability does not satisfy a condition, included in the target temporary data set, and reliability calculated for an element label that matches or is similar to the element label of the extracted data set satisfies the condition, for each of the one or more element labels, the information update unit adds the extracted data set and/or the target temporary data set to the configuration management information.

8. The information construction apparatus according to claim 1, wherein
each element label is a configuration information label that is a label of a category to which the product configuration belongs or a vendor name that is a vendor of the product.

9. The information construction apparatus according to claim 8, wherein
the product management information is a software bill of materials (SBOM).

10. The information construction apparatus according to claim 1, wherein
the authenticity evaluation unit calculates the reliability of the element label on a rule basis, for at least one of the single or the plurality of extracted element labels.

11. The information construction apparatus according to claim 1, wherein
the authenticity evaluation unit specifies whether or not any one or more of a plurality of evaluation rules associated with a point is satisfied, for at least one of the single or the plurality of extracted element labels and calculates the reliability based on a point corresponding to each of the one or more satisfied evaluation rules.

12. The information construction apparatus according to claim 1, wherein
in a case where the single or the plurality of extracted element labels includes one or more low-reliability labels, the information update unit adds a data set including the one or more low-reliability labels and the extracted configuration information to temporary management information as a temporary data set,
the low-reliability label is an element label of which reliability does not satisfy a condition,
each temporary data set included in the temporary management information is a data set including one or more low-reliability labels and configuration information corresponding to the one or more low-reliability labels, and
in a case where the information update unit specifies that low reliability of a certain element label is maintained from the temporary management information, the information update unit updates an evaluation rule regarding the certain element label.

13. The information construction apparatus according to claim 3, wherein
in a case where a temporary data set including the extracted configuration information is in the temporary management information, the prompt generation unit generates a prompt used to obtain the low-reliability label in the temporary data set for the configuration information.

14. An information construction method performed by a computer, comprising:
acquiring information of which authenticity is reserved as input information;
in a case where configuration information extracted from the input information is not included in configuration management information at least as a part of product management information regarding a single or a plurality of products, generating a prompt used to obtain a single or a plurality of element labels corresponding to the configuration information and inputting the prompt into a generative model;
in a case where a single or a plurality of element labels is extracted from output data of the generative model, calculating reliability of the element label for each of the single or the plurality of element labels; and
in a case where the single or the plurality of extracted element labels includes one or more high-reliability labels, adding a data set including the one or more high-reliability labels and the extracted configuration information to the configuration management information as an authenticity data set, wherein
the configuration information is information indicating a product configuration that is at least one of a name and a model number of a product,
the high-reliability label is an element label of which reliability satisfies a condition, and
each authenticity data set included in the configuration management information is a data set including the one or more high-reliability labels and the configuration information corresponding to the one or more high-reliability labels.

15. A recording medium recording a computer program for causing a computer to execute processing, comprising:
acquiring information of which authenticity is reserved as input information;
in a case where configuration information extracted from the input information is not included in configuration management information at least as a part of product management information regarding a single or a plurality of products, generating a prompt used to obtain a single or a plurality of element labels corresponding to the configuration information and inputting the prompt into a generative model;
in a case where a single or a plurality of element labels is extracted from output data of the generative model, calculating reliability of the element label for each of the single or the plurality of element labels; and
in a case where the single or the plurality of extracted element labels includes one or more high-reliability labels, adding a data set including the one or more high-reliability labels and the extracted configuration information to the configuration management information as an authenticity data set, wherein
the configuration information is information indicating a product configuration that is at least one of a name and a model number of a product,
the high-reliability label is an element label of which reliability satisfies a condition, and
each authenticity data set included in the configuration management information is a data set including the one or more high-reliability labels and the configuration information corresponding to the one or more high-reliability labels.
